# EUROPÄISCHE PATENTSCHRIFT

(11) **EP 1 982 908 B1**
(45) Veröffentlichungstag und Bekanntmachung des Hinweises auf die Patenterteilung: **18.11.2009**
(21) Anmeldenummer: 08006805.9
(22) Anmeldetag: 03.04.2008
(51) Int. Cl.: B62K 3/00, B62K 5/04, B62K 5/08, B62K 21/00, B62M 1/12, B62M 1/14, B62M 1/16

(54) **Fahrrad mit Neigungslenkung**
Bicycle with steering by leaning
Bicyclette avec direction par inclinaison

(30) Priorität: 03.04.2007 DE 102007016381; 28.04.2007 EP 07008716; 09.05.2007 EP 07009294; 14.06.2007 EP 07011680
(43) Veröffentlichungstag der Anmeldung: 22.10.2008
(60) Teilanmeldung: 09012131.0
(73) Patentinhaber: Kraiß, Martin, 89081 Ulm (DE)
(72) Erfinder: Kraiß, Martin, 89081 Ulm (DE)

(56) Entgegenhaltungen:
- EP-A- 0 379 218
- WO-A-2006/014048
- WO-A-2008/032969
- DE-A1- 2 539 817
- DE-A1- 10 158 594
- KR-A- 20050 040 655
- KR-A- 20070 025 969
- US-A- 5 209 506
- US-A- 5 354 084
- US-A- 6 070 894
- US-A1- 2001 042 968
- US-A1- 2004 188 977
- US-A1- 2007 001 422
- US-B1- 6 352 274

## Beschreibung

Bei der Erfindung handelt es sich um ein zweirädriges Fahrrad das über Armkurbelantrieb, oder über Arm- und Beinkurbelantrieb, verfügt.

Ein Fahrrad ist ein Fahrzeug, das vom Fahrradfahrer mit Muskelkraft angetrieben wird.

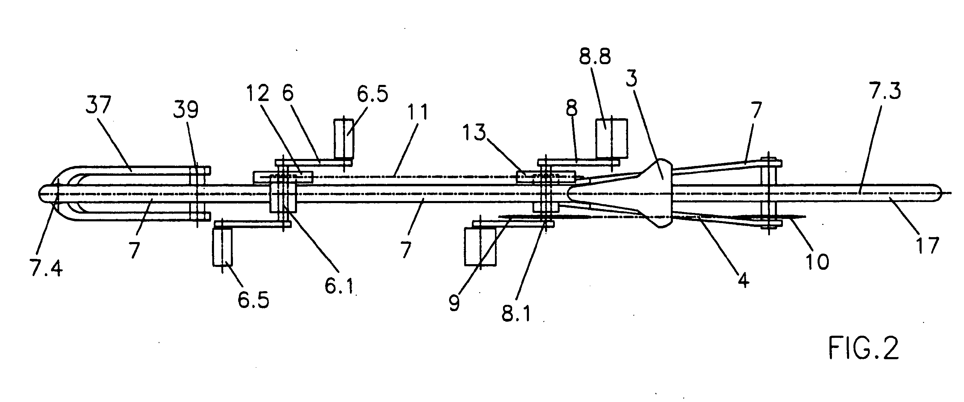

Bekannte Fahrräder mit Arm- und Beinkurbelantrieb werden über die Hände gelenkt und angetrieben. DE 198 29150 A1 offenbart ein Fahrrad gemäß dem Oberbegriff der unabhängigen Ansprüche 1 und 9. In dieser Anmeldung wird das Fahrrad über einen Arm- und einen Beinkurbelantrieb angetrieben und über den Sattel 3 gelenkt (Fig.2 der Anmeldung DE 198 29 750 A1). Das bekannte Fahrrad verfügt über eine Lenkachse, die in Fahrtrichtung gesehen, hinter der Achse 5 des Vorderrades verläuft. Somit wird das Vorderrad 5 von der Lenkachse geschoben.

Die Aufgabe der Erfindung ist es, dass der Fahrradfahrer seine Antriebskraft optimal auf das Fahrrad übertragen kann. Weiterhin ist es die Aufgabe der Erfindung die Lenkung des Fahrrades vor dem Einfluss von Antriebskräften zu bewahren. Der Fahrradfahrer soll das Fahrrad mit seiner ganzen Kraft antreiben können und dabei das Fahrrad sicher und präzise lenken können.

Die Erfindung löst die geschilderte Aufgabe durch ein Fahrrad gemäß Anspruch 1 bzw. durch ein Verfahren zum Fahren dieses Fahrrads gemäß Anspruch 9.
In der Erfindung lenkt der Fahrradfahrer das Fahrrad durch Neigen des Fahrradrahmen quer zur Fahrtrichtung.
Außerdem ist der Armantrieb bzw. ggf. der Arm- und der Beinantrieb im Fahrradrahmen gelagert. Somit werden sämtliche Antriebskräfte von diesen Lagerungen im Fahrradrahmen aufgenommen und in ein Antriebsmoment umgewandelt. Das Antriebsmoment wird auf das Hinterrad übertragen.

Es werden keine Antriebskräfte auf die Lenkung übertragen. Dadurch kann der Fahrradfahrer das Fahrrad mit seiner vollen Armkraft bzw. ggf. mit seiner vollen Arm- und Beinkraft antreiben, ohne dass er dabei ungewollte Lenkkräfte erzeugt.

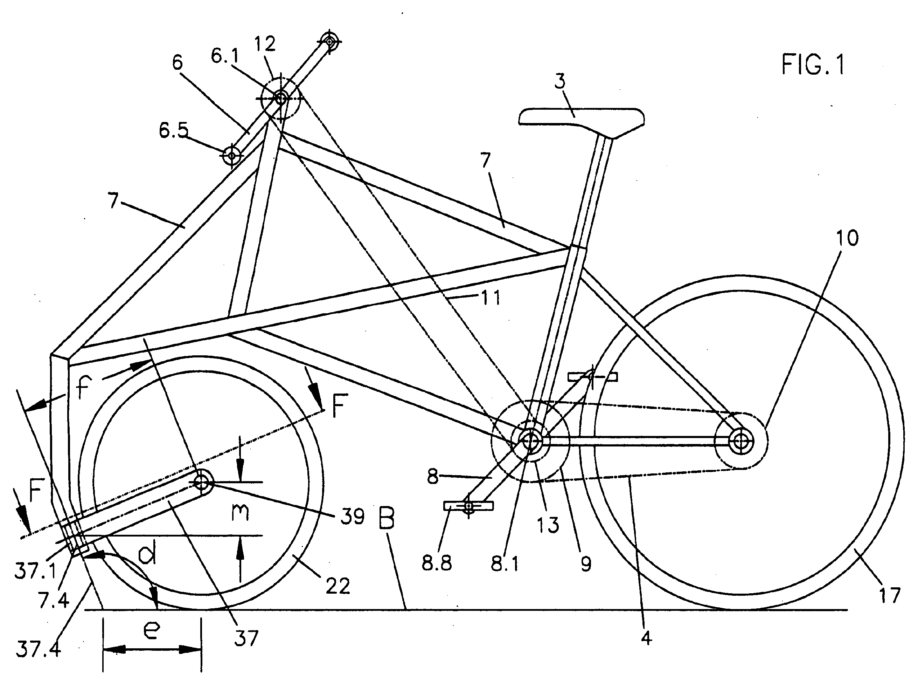

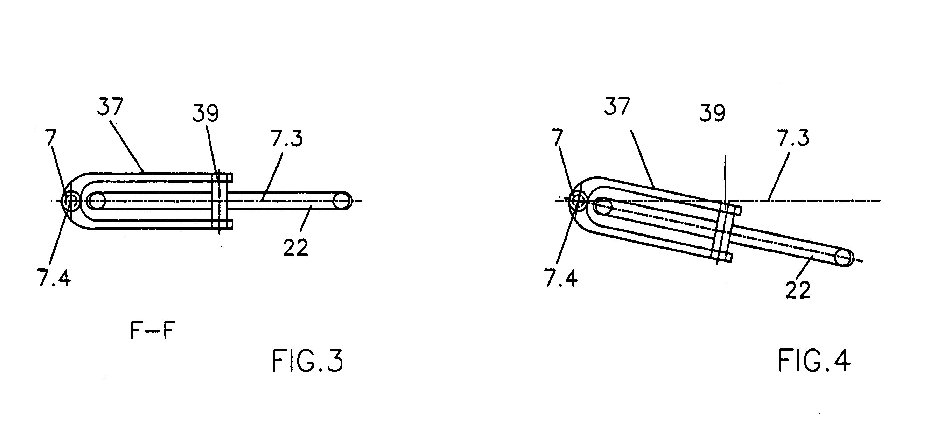

In den erfindungsgemäßen Varianten A4, A5 und A6 treibt der Fahrradfahrer mit seinen Armen die Handkurbeln 6 und mit seinen Beinen die Tretkurbeln 8 des Fahrrades an. FIG.1 zeigt die Ansicht, FIG.2 die Draufsicht und FIG.3 den Schnitt F-F der erfindungsgemäßen Variante A4. Die Handkurbeln 6 sind dabei, über die Achse 6.1, im Fahrradrahmen 7 drehbar gelagert Durch die Lagerung der Handkurbeln 6 im Fahrradrahmen 7 werden die Kräfte, die beim Antrieb auf die Handkurbeln 6 wirken, vom Fahrradrahmen 7 aufgenommen und über einen Synchronriemen 11 und eine Antriebskette 4 auf das Hinterrad übertragen. Der Vorteil dabei ist, dass die Lenkung damit vom Antrieb entkoppelt ist. Die Antriebskraft der Arme wird einfach über den Synchronriemen 11 übertragen. Dieser Synchronriemen 11 verbindet die Handkurbeln 6, über Synchronscheiben 12,13, mit den Tretkurbeln 8 und verläuft parallel zur Antriebskette 4 des Hinterrades 17 (FIG.1,2). Somit ist keine aufwendige Umlenkmechanik notwendig, welche erst den Armantrieb auf das Hinterrad 17 ermöglicht, wenn sich die Handkurbeln 6 auf der sich schwenkenden Gabel befinden (vgl. PCT Patent WO 00/63066). Weiterhin ist auch keine zweite Gangschaltung notwendig, über die die Antriebskräfte der Handkurbeln 6 auf das Vorderrad 22 übertragen werden. In den den erfindungsgemäßen Varianten A4, A5 und A6 kann für den Arm- und den Beinantrieb eine gemeinsame Schaltung verwendet werden, was Gewicht und Kosten spart. Auf den Handkurbeln 6 sind die Handkurbelgriffe 6.5 drehbar gelagert. Die Tretkurbeln 8 sind mit der Achse 8.1 verschraubt. Diese Achse 8.1 ist über das Tretlager drehbar im Fahrradrahmen 7 gelagert.
Zum Antrieb des Fahrrades bewegt der Fahrer mit seinen Händen die Handkurbeln 6 und mit seinen Füßen die Tretkurbeln 8. Auf den Tretkurbeln 8 sind die Pedale 8.8 drehbar gelagert. An den Kurbeln 6,8 sind Synchronscheiben 12,13 befestigt. Diese sind über den Synchronriemen 11 miteinander verbunden. Somit ist ein synchroner Lauf der Kurbeln 6,8 gewährleistet. Der Synchronriemen 11 verläuft, aus Fahrersicht, rechts vom Fahrradrahmen 7. Auf der linken Seite des Fahrradrahmens 7 verläuft die Antriebskette 4. Sie treibt über das Antriebskettenrad 9, welches fest mit der Tretkurbel 8 verbunden ist, und über das Antriebsritzel 10 das Hinterrad 17 an.

In der erfindungsgemäßen Variante A4 läuft das Vorderrad 22, bei Geradeausfahrt, entlang der Fahrradmittelachse 7.3 (FIG.3). Das Vorderrad 22 ist über die Achse 39 drehbar im Achsschenkel 37 gelagert (FIG.1,3,4). In Variante A4 besteht die Lagerung des Achsschenkels 37 aus dem das Lenkkopflagerrohr 37.1, dem Lenkkopflager und der Achse 7.4. Für alle erfindungsgemäßen Varianten gilt, dass ein Achsschenkel ein beweglicher Arm ist, auf dem ein lenkendes Rad drehbar gelagert ist. Das Lenkkopflagerrohr 37.1 ist fest mit dem Achsschenkel 37 verbunden. Die Achse 7.4 ist fest mit dem Fahrradrahmen 7 verbunden. Zwischen dem Lenkkopflagerrohr 37.1 und der Achse 7.4 befindet sich das Lenkkopflager. Das Lenkkopflagerrohr 37.1, und somit der Achsschenkel 37, ist über das Lenkkopflager schwenkbar auf der Achse 7.4, und somit auf dem Fahrradrahmen 7, gelagert. Diese Lagerung des Achsschenkels 37 befindet sich, um das Maß m, vertikal unterhalb der Achse 39 des Vorderrades 22. In Variante A4 ist die Lenkachse 37.4 die gemeinsame Achse des Lenkkopflagers, des Lenkkopflagerrohres 37.1 und der Achse 7.4. Die Lenkachse 37.4 befindet sich vor der Achse 39 des Vorderrades 22 und steht in einem Winkel d zur Aufstandsfläche B (FIG.1). Je kleiner der Winkel d ist, desto weniger Neigung des Fahrradrahmens 7 ist für den gleichen Lenkeinschlag erforderlich. Der Winkel d beträgt zwischen 95° und 140°, vorzugsweise zwischen 105° und 125°. Der Abstand e ist der Nachlauf des Vorderrades 22. Der Abstand e ist größer null. Er ist der Abstand vom sogenannten Spurpunkt zum Aufstandspunkt des Vorderrades 22 auf der Aufstandsfläche B. Der Spurpunkt ist der Schnittpunkt der Lenkachse 37.4 mit der Aufstandsfläche B. Durch diesen Nachlauf e lenkt das Vorderrad 22, bei einem Kippen des Fahrrades nach links, ebenso nach links. Das Vorderrad 22 läuft dem Spurpunkt nach, deshalb der Name "Nachlauf". Außerdem bewirkt die Neigung d der Lenkachse 37.4, in Verbindung mit dem sogenannten Rücksprung f der Achse 39 des Vorderrades 22 zur Lenkachse 37.4, dass bei Geradeausfahrt des Fahrrades die Gewichtskraft des Fahrrades und des Fahrradfahrers das Vorderrad 22 in Geradeausstellung halten und das Fahrrad so spurstabil machen.

In der erfindungsgemäßen Variante A4 ist der Vorderraddurchmesser kleiner als 600 mm. Er darf in der Variante A4 nicht größer sein, da in der Variante A4, bei einem Vorderraddurchmesser von 600 mm, der Rücksprung f mindestens 300 mm beträgt.
Vorteilhafterweise sollte der Rücksprung f aber nicht noch größer als der der Variante A4 sein, da bei einem noch größeren Rücksprung f die für die Lenkmanöver benötigte Neigungskraft zu groß wäre.
FIG.4 zeigt die gleiche Schnittansicht wie FIG.3 jedoch einen Lenkeinschlag des Vorderrades 22 im Uhrzeigersinn, also einen Lenkeinschlag des Fahrrades nach rechts.
Neigt der Fahrradfahrer den Fahrradrahmen 7 in etwa quer zur Fahrtrichtung nach links, dann schwenkt der Achsschenkel 37 und somit das Vorderrad 22, gegen den Uhrzeigersinn um die Lenkachse 37.4 und das Fahrrad lenkt nach links.
Neigt der Fahrradfahrer den Fahrradrahmen 7 in etwa quer zur Fahrtrichtung nach rechts, dann schwenkt der Achsschenkel 37 und somit das Vorderrad 22, mit dem Uhrzeigersinn um die Lenkachse 37.4 und das Fahrrad lenkt nach rechts.
Die Seitenangaben "links" und "rechts" bedeuten in allen geschilderten Varianten, die Seiten aus der Sicht des Fahrradfahrers der in Fahrtrichtung auf dem Fahrrad sitzt.Während des Neigens hält der Fahrradfahrer die Handkurbelgriffe 6.5 mit seinen Händen fest.
Der Fahrradfahrer neigt das Fahrrad, indem er mit seinen Armen die Handkurbelgriffe 6.5 und somit den Fahrradrahmen 7, in etwa quer zur Fahrtrichtung, auf eine Seite (nach links oder rechts) gegen die Aufstandsfläche B neigt. Durch dieses Neigen lenkt er das Fahrrad.
Alternativ neigt der Fahrradfahrer das Fahrrad, indem er durch eine Gewichtsverlagerung seines Körpers, Richtung kurveninnere Seite, die Handkurbeln 6 auch Richtung kurveninnere Seite zieht. Dadurch neigt er den Fahrradrahmen 7, in etwa quer zur Fahrtrichtung auf die selbige Seite, gegen die Aufstandfläche B des Fahrrades.
Während dieses Neigens beziehungsweise Lenkens kann der Fahrradfahrer das Fahrrad mit seinen Armen antreiben, da er die Handkurbelgriffe 6.5 mit seinen Händen festhält.
Die Lenkung des Fahrrades ist vom Antrieb des Fahrrades entkoppelt. Durch die Lagerung der Handkurbeln 6 im Fahrradrahmen 7 werden die Kräfte, die beim Antrieb auf die Handkurbeln 6 wirken, vom Fahrradrahmen 7 aufgenommen und über den Synchronriemen 11 und die Antriebskette 4 auf das Hinterrad 17 übertragen.

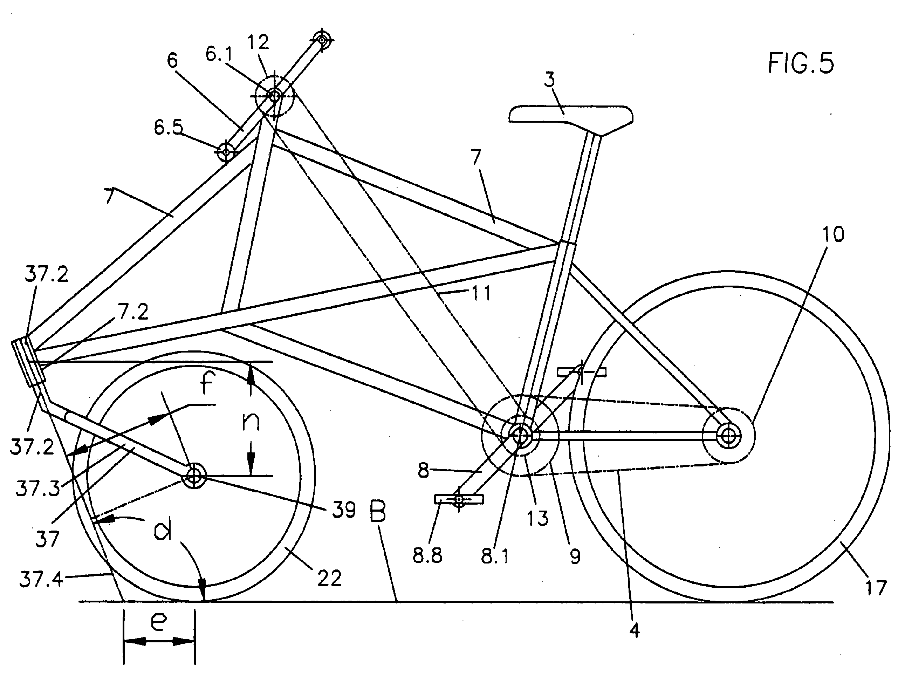

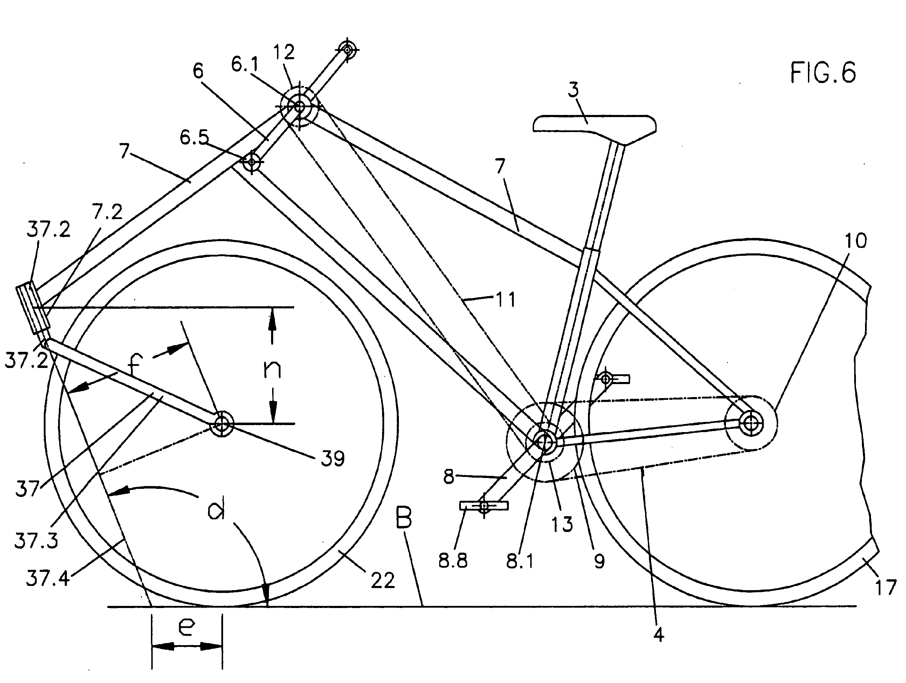

Die erfindungsgemäße Variante A5 entspricht der Variante A4. FIG.5 und 6 zeigen die Seitansichten der erfindungsgemäßen Variante A5. Auch in dieser Variante befindet sich die Lenkachse 37.4 vor der Achse 39 des Vorderrades 22, steht in einem Winkel d zur Aufstandsfläche B, hat einen Nachlauf e und die Achse 39 hat einen Rücksprung f zur Lenkachse 37.4. Allerdings befindet sich die Lagerung des Achsschenkels 37, entlang der Lenkachse 37.4, weiter oberhalb. Die Lagerung des Achsschenkels 37 befindet sich, um das Maß n, vertikal oberhalb der Achse 39 des Vorderrades 22 (FIG.5). Der Achsschenkel 37 hat eine ähnliche Form, wie die einer Fahrradgabel eines gewöhnlichen Fahrrades. Der Achsschenkel 37 besitzt zwei Achsschenkelrohre 37.3. Diese beiden Achsschenkelrohre 37.3 nehmen die Achse 39 des Vorderrades 22 an ihren Enden auf und verlaufen je recht und links um das Vorderrad 22 und laufen dann in der Fahrradmittelachse 7.3 zusammen, wo die beiden Achsschenkelrohre 37.3 mit der Achse 37.2 fest verbunden sind. In Variante A5 besteht die Lagerung des Achsschenkels 37 aus dem das Lenkkopflagerrohr 7.2, dem Lenkkopflager und der Achse 37.2. Die Achse 37.2 ist fest mit die beiden Achsschenkelrohren 37.3 und somit mit dem Achsschenkel 37 verbunden und ist über das Lenkkopflager in dem Lenkkopflagerrohr 7.2 gelagert, welches fest mit dem Fahrradrahmen 7 verbunden ist. In Variante A5 ist die Lenkachse 37.4 die gemeinsame Achse des Lenkkopflagers, des Lenkkopflagerrohrs 7.2 und der Achse 37.2.
Die Variante A4 hat den Nachteil dass, bei gleich bleibendem Winkel d, der Vorderraddurchmesser nicht vergrößert werden kann, ohne dabei den Nachlauf e oder der Rücksprung f zu vergrößern.
Die Variante A5 erlaubt hingegen einen bedeutend größeren Vorderraddurchmesser, bei gleichbleibendem Winkel d, Nachlauf e und Rücksprung f. In der Variante A5 ist sogar ein größerer Vorderraddurchmesser bei gleichbleibendem Winkel d und kleinerem Nachlauf e und kleinerem Rücksprung f möglich. Ein größerer Vorderraddurchmesser ist insbesondere von Vorteil, da sich mit einem größeren Vorderrad 22 die Fahreigenschaften des Fahrrades verbessern. Mit den größeren Laufrädern 17,22 vergrößert sich deren Kreiselwirkung und diese tragen zur Aufrechterhaltung des Gleichgewichts beim Fahrradfahren bei. Insbesondere bei mittleren Geschwindigkeiten bewirken die Kreiselwirkung eine Eigenstabilisierung des Fahrrades. Dadurch wird das Fahrrad laufruhiger und es neigt weniger dazu zur Seite wegzukippen. Somit muss der Fahrradfahrer weniger durch ausgleichende Bewegungen eingreifen, um das Fahrrad bei der Geradeausfahrt senkrecht zu halten und vor dem Umkippen zu bewahren.

Dies ermöglicht auch eine vorteilhafte Ausführung der Variante A5. In dieser Ausführung besitzt das erfindungsgemäße Fahrrad der Variante A5 ein größeres Vorderrad 22 (FIG.6). Das Vorderrad 22 hat einen Durchmesser von 29 Zoll, das sind etwa 740 mm.
Im Allgemeinen ist für die Variante A5 ein Vorderrad 22 besonders vorteilhaft, das einen Durchmesser größer 600 mm besitzt. Noch laufruhiger sind Ausführungen der Variante A5 mit Vorderraddurchmessern größer 700 mm.

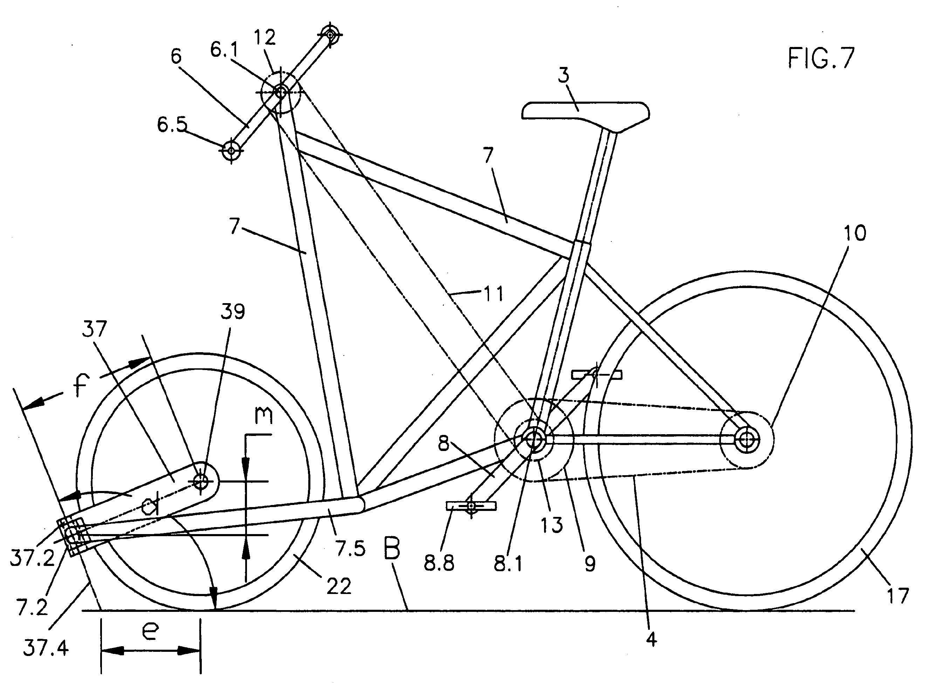

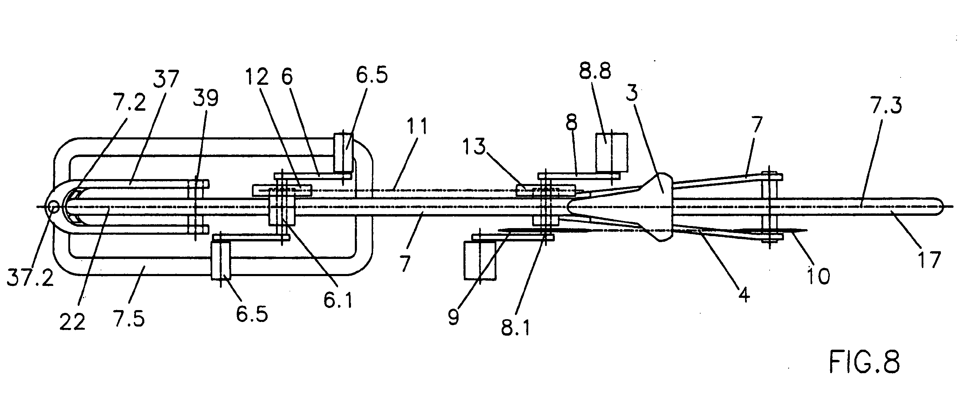

Die erfindungsgemäße Variante A6 entspricht der Variante A4. FIG.7 zeigt die Seitansicht und FIG.8 zeigt die Draufsicht der erfindungsgemäßen Variante A6. Auch in dieser Variante befindet sich die Lenkachse 37.4 vor der Achse 39 des Vorderrades 22, steht in einem Winkel d zur Aufstandsfläche B, hat einen Nachlauf e und die Achse 39 hat einen Rücksprung f zur Lenkachse 37.4.
Allerdings besteht die Lagerung des Achsschenkels 37 in der Variante A6 aus dem Lenkkopflagerrohr 7.2, dem Lenkkopflager und der Achse 37.2. Die Achse 37.2 ist fest mit dem Achsschenkel 37 verbunden und ist über das Lenkkopflager in dem Lenkkopflagerrohr 7.2 gelagert, welches fest mit dem Rahmenstück 7.5 verbunden ist. Das Rahmenstück 7.5 ist fest mit dem Fahrradrahmen 7 verbunden. Das Rahmenstück 7.5 verläuft, zum Lenkkopflagerrohr 7.2 hin, um das Vorderrad 22 und den Achsschenkel 37 herum. In Variante A6 ist die Lenkachse 37.4 die gemeinsame Achse des Lenkkopflagers, des Lenkkopflagerrohrs 7.2 und der Achse 37.2.

Die erfindungsgemäße Variante C1 ist für querschnittsgelähmte Fahrradfahrer, oder Fahrradfahrer ohne Beine, gedacht. Die Variante C1 entspricht der Varianten A4 bis A6. Allerdings hat die Variante C1 keinen Beinantrieb, sondern nur den Armantrieb über die Handkurbeln 6 (ohne Abbildung). Im Gegensatz zu den anderen Varianten besitzt das Fahrrad keine Tretkurbeln 8 und keine Pedale 8.8. Weiterhin hat der Sattel nicht die Form eines normalen Fahrradsattels, sondern er hat eine breite Auflage für die ganze Breite des Gesäßes des Fahrradfahrers. Ober die breite Auflagefläche kann der Fahrradfahrer das Moment, zum Neigen des Fahrrades während des Lenkens, besser auf das Fahrrad ausüben. Das Fahrrad besitzt Beinauflagen die am Fahrradrahmen befestigt sind. In diese kann der querschnittgelähmte Fahrradfahrer seine Beine während der Fahrt ablegen.

Die Patentansprüche kennzeichnen den Schutzumfang. Die Beschreibung sind Ausführungsbeispiele des erfinderischen Gedankens.

## Patentansprüche

1. Zweirädriges Fahrrad mit einer Lenkung die ein Vorderrad (22) besitzt, mit Armantrieb mit mindestens einer Handkurbel (6), **dadurch gekennzeichnet, dass** das Vorderrad (22) um wenigstens eine Lenkachse (37.4) drehbar oder schwenkbar zum Fahrradrahmen (7) gelagert ist und sich die wenigstens eine Lenkachse (37.4) vor einer Achse (39) des Vorderrades (22) befindet.

2. Fahrrad nach Anspruch 1, **dadurch gekennzeichnet, dass** das Fahrrad einen Beinantrieb besitzt mit mindestens einer Tretkurbel (8).

3. Fahrrad nach Anspruch 1 oder 2, **dadurch gekennzeichnet, dass** die wenigstens eine Handkurbel (6) drehbar im Fahrradrahmen (7), oder in einem am Fahrradrahmen befestigten Teil, gelagert ist.

4. Fahrrad nach einem der Ansprüche 1 bis 3, **dadurch gekennzeichnet, dass** der Durchmesser des Vorderrades (22) größer 600 mm, vorzugsweise größer 700 mm, ist.

5. Fahrrad nach einem der Ansprüche 1 bis 4, **dadurch gekennzeichnet, dass** die Lenkachse (37.4) - von der Aufstandsfläche B des Fahrrades ausgehend - einen Winkel d von 95° bis 140°, vorzugsweise von 105° bis 125° aufweist.

6. Fahrrad nach einem der Ansprüche 1 bis 5, **dadurch gekennzeichnet, dass** eine Achse (39) des Vorderrades (22) einen Rücksprung f von 0 bis 400 mm, vorzugsweise von 50 bis 200 mm, zur Lenkachse (37.4) besitzt.

7. Fahrrad nach einem der Ansprüche 1 bis 6, **dadurch gekennzeichnet, dass** die Lenkung wenigstens ein Lenkkopflager besitzt und sich das Lenkkopflager oberhalb der Achse (39) des Vorderrades (22) befindet.

8. Fahrrad nach einem der Ansprüche 1 bis 6, **dadurch gekennzeichnet, dass** die Lenkung wenigstens Lenkkopflager besitzt und sich das Lenkkopflager unterhalb der Achse (39) des Vorderrades (22) befindet.

9. Verfahren zum Fahren eines Fahrrades nach einem der Ansprüche 1 bis 8, bei dem der Fahrradfahrer das Fahrrad mit Armkurbelbewegungen antreibt, **dadurch gekennzeichnet, dass** ein Fahrradfahrer das Fahrrad lenkt, indem er den Fahrradrahmen (7), gegen die Aufstandsfläche B neigt und sich durch diese Neigung ein Vorderrad (22) um die wenigstens eine Lenkachse (37.4) schwenkt oder dreht.

10. Verfahren nach Anspruch 9, **dadurch gekennzeichnet, dass** außer dem Neigen des Fahrradrahmens (7) keine weiteren Lenkbewegungen durch den Fahrradfahrer notwendig sind.

11. Verfahren nach Anspruch 9 oder 10, **dadurch gekennzeichnet, dass** der Fahrradfahrer das Fahrrad zusätzlich mit Beinkurbelbewegungen antreibt.

12. Verwendung eines zweirädrigen Fahrrades nach einem der Ansprüche 1 bis 8.

## Claims

1. A two-wheeled bicycle comprising a steering having a front wheel (22) provided with an arm actuator furnished with at least one manual crank (6),
**characterised in that** the front wheel (22) is pivotally or tiltably disposed about at least one steering axle (37.4) toward frame (7) of the bicycle and that the at least one steering axle (37.4) is located ahead of an axle (39) of the front wheel (22).

2. A bicycle according to claim 1,
**characterised in that** the vehicle comprises a pedal actuator provided with at least one pedal crank (8).

3. A bicycle according to claims 1 or 2,
**characterised in that** the at least one manual crank (6) is pivotally disposed in the frame (7) of the bicycle or in a member secured to the frame of the bicycle.

4. A bicycle according to any one of claims 1 through 3,
**characterised in that** the diameter of the front wheel (22) is >600 mm, preferably >700 mm.

5. A bicycle according to any one of claims I through 4,
**characterised in that** the steering axle (37.4), viewed from bearing face B of the bicycle, is at an angle of 95° through 140°, preferably 105° through 125°.

6. A bicycle according to any one of claims I through 5,
**characterised in that** an axle (39) of the front wheel (22) has a rake(offset) f of from 0 through 400 mm, preferably from 50 through 200 mm over the steering axle (37.4).

7. A bicycle according to any one of claims 1 through 6,
**characterised in that** the steering comprises at least one steering head bearing and that the steering head bearing is located above the axle (39) of the front wheel (22).

8. A bicycle according to any one of claims 1 through 6,
**characterised in that** the steering comprises at least one steering head bearing and that the steering head bearing is located below the axle (39) of the front wheel (22).

9. A process for driving a bicycle according to any one of claims 1 through 8, wherein the cyclist actuates the bicycle by moving the manual crank,
**characterised in that** the cyclist steers the bicycle by inclining the frame 7 of the bicycle against the bearing face B and that, due to such an inclination, a front wheel (22) is pivoted or rotated about the at least one steering axle (37.4).

10. A process according to claim 9,
**characterised in that** except for the inclination of frame (7) of the bicycle no additional steering movement on the part of the cyclist is required.

11. A process according to any one of claims 9 or 10,
**characterised in that** the cyclist additionally actuates the bicycle by moving the pedal cranks.

12. The use of a two-wheeled bicycle according to any one of claims 1 through 8.

## Revendications

1. Vélo à deux roues avec un guidon équipé d'une roue avant (22), avec un actionnement au bras composé d'au moins une manivelle (6), **caractérisé en ce que** la roue avant (22) est logée sur au moins un arbre de direction (37.4) de manière orientable ou pivotante par rapport au cadre du vélo (7) et que cet arbre de direction (37.4) se situe devant un axe (39) de la roue avant (22).

2. Vélo selon revendication 1 **caractérisé en ce que** le vélo est doté d'un actionnement à la jambe avec au moins une manivelle de pédalier (8).

3. Vélo selon la revendication 1 ou 2 **caractérisé en ce que** la manivelle (6) est logée de manière orientable dans le cadre du vélo (7) ou dans une pièce fixée au cadre du vélo.

4. Vélo selon les revendications de 1 à 3, **caractérisé en ce que** le diamètre de la roue avant (22) est supérieur à 600 mm, ou de préférence supérieur à 700 mm.

5. Vélo selon les revendications de 1 à 4 **caractérisé en ce que** l'arbre de direction (37.4) est disposé dans un angle « d » de 95 à 140°, de préférence de 105 à 125°, à partir de la surface d'appui « B » du vélo.

6. Vélo selon les revendications de 1 à 5 **caractérisé en ce que** l'axe (39) de la roue avant (22) possède un épaulement « f » de 0 à 400 mm, de préférence de 50 à 200 mm, par rapport à l'arbre de direction (37.4).

7. Vélo selon les revendications de 1 à 6 **caractérisé en ce que** le guidon possède au moins une crapaudine et que cette crapaudine se situe au-dessus de l'axe (39) de la roue avant (22).

8. Vélo selon les revendications de 1 à 6 **caractérisé en ce que** le guidon possède au moins une crapaudine et que cette crapaudine se situe sous l'axe (39) de la roue avant (22).

9. Procédé pour rouler en vélo selon une des revendications de 1 à 8 dans le cadre duquel le cycliste déplace le vélo par l'actionnement de la manivelle au bras, **caractérisé en ce que** le cycliste guide le vélo en inclinant le cadre du vélo (7) contre la surface d'appui « B » et que cette inclinaison a pour effet d'orienter ou de faire pivoter la roue avant (22) autour de l'arbre de direction (37.4).

10. Procédé selon la revendication 9 **caractérisé en ce que** le cycliste ne doit effectuer aucun mouvement de conduite hormis l'inclinaison du cadre du vélo (7).

11. Procédé selon la revendication 9 ou 10 **caractérisé en ce que** le cycliste déplace le vélo en se servant également de la manivelle de pédalier.

12. Utilisation d'un vélo à deux roues selon une des revendications de 1 à 8.
